# EUROPEAN PATENT SPECIFICATION

(11) **EP 1 096 985 B1**
(45) Date of publication and mention of the grant of the patent: **12.05.2004**
(21) Application number: 99934934.3
(22) Date of filing: 22.07.1999
(51) Int. Cl.: B01D 43/00, B01J 8/16, G01N 15/02

(54) **CONCENRATION OF PARTICLES IN A FLUID WITHIN AN ACOUSTIC STANDING WAVE FIELD**
PARTIKELKONZENTRATION IN EINEM FLUID IN EINEM AKUSTISCHEN FELD MIT STEHENDEN WELLEN
CONCENTRATION DE PARTICULES DANS UN FLUIDE A L'INTERIEUR D'UN CHAMP D'ONDES STATIONNAIRES ACOUSTIQUES

(30) Priority: 22.07.1998 GB 9815919
(43) Date of publication of application: 09.05.2001
(73) Proprietor: Protasis UK Limited, Stockport, Cheshire SK4 2ED (GB)
(72) Inventor: CEFAI, Joseph, Swansea SA5 9DJ (GB); BARROW, David Anthony, Cardiff CF4 3LB (GB); COAKLEY, William, Terence, Cardiff CF2 5PX (GB); HAWKES, Jeremy John, Panylan, Cardiff CF2 5DT (GB)
(74) Representative: Gibson, Stewart Harry
(86) International application number: PCT/GB1999/002384
(87) International publication number: WO 2000/004978

(56) References cited:
- EP-A- 0 633 049
- EP-A- 0 773 055
- WO-A-93/19367
- US-A- 5 225 089
- US-A- 5 626 767
- PATENT ABSTRACTS OF JAPAN vol. 018, no. 627 (P-1834), 29 November 1994 (1994-11-29) & JP 06 241977 A (HITACHI LTD;OTHERS: 01), 2 September 1994 (1994-09-02)
- PATENT ABSTRACTS OF JAPAN vol. 1995, no. 05, 30 June 1995 (1995-06-30) & JP 07 047259 A (HITACHI LTD), 21 February 1995 (1995-02-21)

## Description

The present invention relates to a device for performing the manipulation of particles suspended in a fluid, using an acoustic standing wave field.

When particles suspended in a fluid are subjected to an acoustic standing wave field, the particles displace to the location of the standing wave nodes, the effectiveness of this process varying with the relative densities and compressibilities of the particles of the suspending fluid. A number of techniques have been proposed, using this phenomenon, to separate particles from a liquid or other fluid. Typically, the fluid is caused to flow through a duct in which an acoustic standing wave field is established, transverse to the length of the duct. The particles accordingly displace to form a series of parallel bands: a number of outlet passages may be provided to lead the individual bands of particles away from the main flow duct. Because there are engineering difficulties involved in providing an array of narrow outlet passages to collect the particle bands, the tendency is to operate at relatively low frequencies so that the wavelength of the standing wave field is sufficiently large to provide an adequate spacing (half wavelength spacing) between the particle bands.

The primary acoustic force on a single particle in an acoustic standing wave field is proportional to the operating frequency. Also the distance which a particle needs to move to reach a node decreases with increasing frequency, because the wavelength is smaller and hence the spacing between notes is smaller. It is therefore easier to concentrate particles (including biological cells) at higher operating frequencies. Ultrasonic cavitation is also less likely to limit the applicable acoustic pressure at higher frequencies. However, the use of high frequencies, and therefore smaller wavelengths, increases the engineering difficulties involved in providing outlet passages for the individual particle bands. Also, in cases where it is desired to observe the particle bands, this is difficult or impossible when the bands are close together.

Our International patent application PCT/GB98/01274 proposes an apparatus for alleviating the above-noted difficulties. Thus, that application discloses an apparatus which comprises a duct for the flow of the fluid in which particles are suspended, and means for establishing an acoustic standing wave field across the width of the duct, in which the duct is formed with an expansion in width downstream of the standing wave field. In use of this apparatus, the particles in the flowing fluid are displaced into a series of parallel bands by the acoustic standing wave field. The particles remain in these bands as the fluid flows downstream from the section in which the standing wave field is present. When the fluid reaches the expansion of the duct, the stream of fluid expands correspondingly in width and, in so doing, the bands of particles are spread further apart, so increasing the spacing between adjacent bands. In passing further along the flow duct, the particle bands retain increased spacing: the bands can now either be observed, or they can be separated from the duct.

In the apparatus disclosed in our International patent application PCT/GB98/01274, the duct has a width of 1mm in the section where the acoustic standing wave field is established. We have now found that considerable advantages accrue by forming the duct to a substantially smaller width.

Therefore, in accordance with the present invention, there is provided a device for performing the manipulation of particles suspended in a fluid, the device comprising a duct for the flow of a fluid in which particles are suspended, and an acoustic transducer and a reflector for establishing an acoustic standing wave field across the width of the duct, the spacing between the transducer and reflector being 300 microns or less.

The transducer and reflector may form the opposite side walls of a chamber which provides the flow duct. Instead, either the transducer or reflector (or both) may be positioned externally of respective side walls of the chamber. In all cases, it will be appreciated that the width of the duct is substantially smaller than in the apparatus disclosed in our International patent application PCT/GB98/01274. Preferably the spacing between the transducer and reflector is less than 200 microns and most preferably is as small as 100 microns.

We have found that the device of the present invention is particularly effective in concentrating the particles. Preferably a half-wavelength standing wave field is established between the transducer and reflector, such that a single band of particles is formed. We have found that a substantially lower operating voltage is required, relative to chambers of greater width, in order to concentrate the particles: also, we have found that it is an easy matter to trap the particles against the flow of the suspending fluid (regardless of the orientation of the device). Moreover, we have found that extremely small particles can be manipulated effectively: we have manipulated polystyrene latex particles of 46nm diameter but believe that particles even smaller than this can be manipulated effectively.

We also believe that the device of the present invention reduces the phenomenon of particle vortexing or streaming. This phenomenon arises because, in addition to the standing wave field, there is usually a travelling wave component which causes particles to displace from the standing wave node: there is a similar effect due to differences in temperature across the width of the flow duct. However, in the device of the present invention, there is less acoustic loss due to the smaller pathlength and therefore a smaller travelling wave component: also, any localised heat is more easily dissipated due to the increased surface-to-volume ratio of the chamber.

Preferably the device is operated at the resonant frequency of the acoustic chamber, as opposed to the resonant frequency of the acoustic transducer. The operating frequency may therefore be substantially different from the resonant frequency of the transducer. The resonant frequency of the chamber may vary according to manufacturing tolerances, and will vary depending on the particular fluid and suspended particles which are to flow through it: however, the operating frequency can be adjusted for individual devices and for individual applications.

Because the particles can be trapped easily against the fluid flow, the device may be used to hold the particles for required period of time, and release some of the particles selectively (e.g. release half and retain the other half of a trapped quantity of particles). The device may be arranged to move particle from one part of the chamber to another, e.g. by energising one transducer or section of the transducer, whilst de-energising another. Also, particles may be diverted to selective output ports of the chamber.

The device of the present invention is much more effective, the larger devices, at manipulating small particles. A large number of such devices may therefore be arranged in parallel on a fluid flow path, to accommodate a large total volume flow whilst benefitting from the enhanced ability of the individual devices to manipulate small particles.

EP-A-0, 773,055 and JP-A-06-241, 977 disclose devices for performing the manipulation of particles suspended in a fluid, the devices comprising a duct for the flow of a fluid in which the particles are suspended, and an acoustic transducer and a reflector for establishing an acoustic standing wave field across the width of the duct. In EP-A-0,773,055, the device is operated at a frequency of 1MHZ and the acoustic transducer and reflector may be spaced apart by a half-wavelength (0.75mm). In JP-A-06-241,977, the acoustic transducer and reflector may be spaced apart by a half-wavelength, the operating frequency being unspecified.

Embodiments of the present invention will now be described by way of examples only and with reference to the accompanying drawings, in which:
FIGURE 1 is an enlarged sectional view through a particle manipulation device in accordance with this invention;
FIGURE 2 is a similar view of a modified device;
FIGURE 3 is a similar view of a second embodiment of particle manipulation device in accordance with the invention; and
FIGURE 4 is a similar view of a third embodiment of particle manipulation device in accordance with the invention.

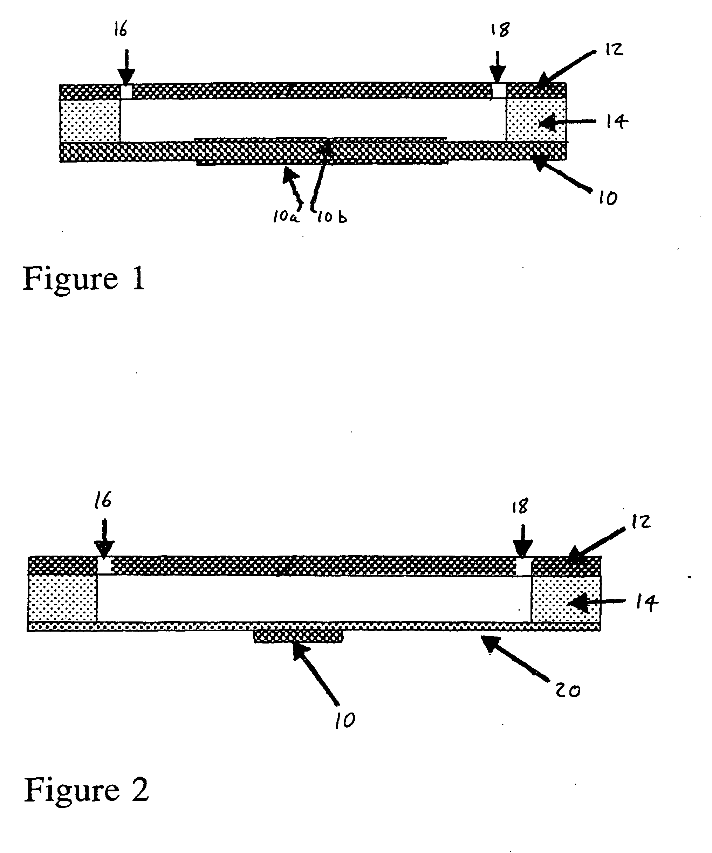

Referring to Figure 1 of the drawings, there is shown a particle manipulation device which comprises an acoustic chamber forming a duct for the through-flow of a fluid in which particles are suspended. The device comprises a planar acoustic transducer 10 and a planar acoustic reflector 12 forming opposite parallel side walls of the chamber, and separated by a spacer 14. Inlet and outlet ports 16 and 18 are formed through the reflector 12 adjacent opposite ends of the chamber: instead, either or both parts may be formed through the transducer 10 or through the spacer 14. The electrodes of the transducer 10 are shown at 10a, 10b on its opposite sides.

In accordance with the invention, the spacing between the transducer 10 and reflector 12 is 300 microns or less and a half-wavelength standing wave field is established between the transducer and reflector, such that a single band of particles is formed. Also, the device is operated at the resonant frequency of the chamber, not at the resonant frequency of the transducer.

As mentioned above, the device is very effective in manipulating the particles and can be used to trap the particles against the through-flow of the suspending fluid.

The electrodes 11a, 11b may be deposited onto the opposite faces of the transducer 10 in a pattern which defines the location and size of the acoustic field. The electrode material can be deposited and patterned using standard microelectronic fabrication techniques.

The reflector 12 may comprise any material which exhibits an appropriate acoustic density, including glass, metal and ceramic. The reflector may comprise a single piece of such material, or it may comprise a layer of such material deposited on a support of another material.

The spacer may be formed by depositing material onto the transducer and/or onto the reflector followed by structuring steps to form the fluid channel. Alternatively, the spacer may comprise a separate member, the transducer, reflector and spacer then being bonded together.

In the modified device shown in Figure 2, the transducer 10 is provided on one face of a planar carrier 20 which forms the side wall of the chamber, opposite the reflector 12. The transducer may be formed by deposition, onto the carrier 20, of pre-cursors of the required piezo-electric material, the deposited materials then being produced (sintered, polarised, etc) to provide the piezo-electric properties. The material of the carrier 20 is selected for its ability to couple the acoustic energy into the chamber. Alternatively, the transducer 10 may comprise a pre-fabricated member which is affixed (e.g. by gluing or bonding) onto the carrier 20: the transducer may be embedded into a recess in the carrier surface.

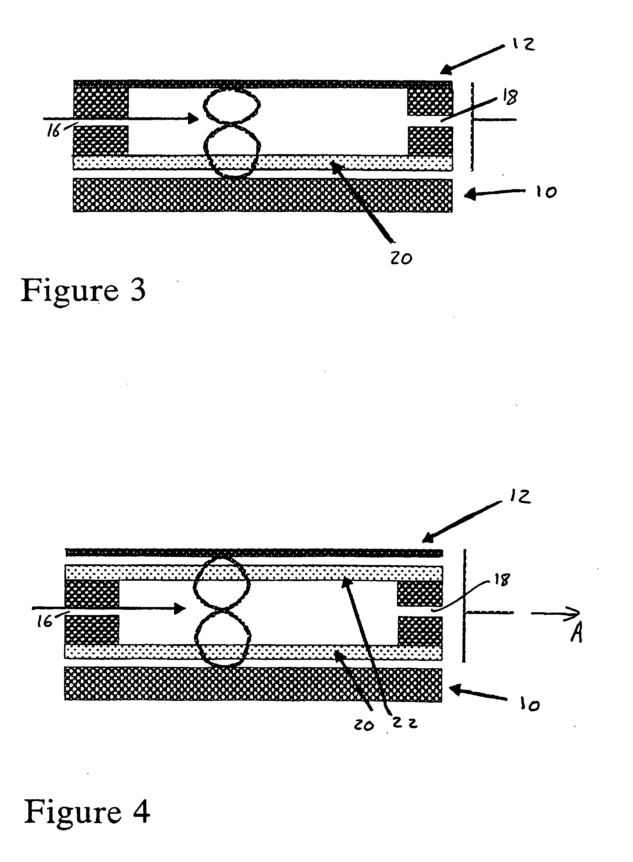

Referring to Figure 3, the transducer 10 may comprise a separate member, or be carried on a separate member, positioned beyond the side wall 220 of the chamber. Referring to Figure 4, both the transducer 10 and reflector 12 comprise separate members positioned beyond the opposite side walls 20, 22 of the chamber: in this case, the acoustic chamber may be removable in sliding manner from a unit which comprises the transducer and reflector, as indicated by the arrow A. It will be appreciated that, in the devices of Figures 3 and 4, the side walls 20, 22 are of materials through which the acoustic energy is able to propagate.

## Claims

1. A device for performing the manipulation of particles suspended in a fluid, the device comprising a duct for the flow of a fluid in which particles are suspended, and an acoustic transducer (10) and a reflector (12) for establishing an acoustic standing wave field across the width of said duct, the spacing between the transducer (10) and reflector (12) being 300 microns or less.

2. A device as claimed in claim 1, in which said transducer (10) and reflector (12) form opposite side walls of a chamber which provides said duct.

3. A device as claimed in claim 1, in which either or both of said transducer (10) and reflector (12) is positioned externally of respective opposite side walls of a chamber which provides said duct.

4. A device as claimed in any preceding claim, in which the spacing between said transducer (10) and reflector (12) is less than 200 microns.

5. A device as claimed in claim 4, in which the spacing between said transducer (10) and reflector (12) is substantially 100 microns.

6. A device as claimed in any preceding claim, arranged such that a half-wavelength standing wave field is established between said transducer (10) and reflector (12) whereby said particles are concentrated into a single band.

7. A device as claimed in any preceding claim, including an alternating current power source for driving said transducer (10), the arrangement serving to operate at a resonant frequency of a fluid-filled chamber which provides said duct, or at a harmonic of said resonant frequency.

8. A device as claimed in any preceding claim, arranged to move particles from one location within a chamber which provides said duct to another location within said chamber.

9. A device as claimed in any preceding claim, arranged to divert particles to selective output ports of a chamber which provides said duct.

## Patentansprüche

1. Vorrichtung zum Durchführen der Handhabung von Teilchen, die in einem Fluid suspendiert sind, welche Vorrichtung eine Leitung für die Strömung eines Fluids, in dem Teilchen suspendiert sind, und einen akustischen Wandler (10) und einen Reflektor (12) zum Ausbilden eines Feldes akustischer stehender Wellen über die Breite der Leitung aufweist, wobei der Abstand zwischen dem Wandler (10) und dem Reflektor (12) 300 Mikron oder weniger beträgt.

2. Vorrichtung nach Anspruch 1, in der der Wandler (10) und der Reflektor (12) entgegengesetzte Seitenwände einer Kammer bilden, die die Leitung bildet.

3. Vorrichtung nach Anspruch 1, in der einer oder beide der aus Wandler (10) und Reflektor (12) bestehenden Teile außerhalb entsprechender gegenüberliegenden Seitenwände einer Kammer angeordnet sind, die die Leitung bildet.

4. Vorrichtung nach einem vorrangehenden Anspruch, in der der Abstand zwischen dem Wandler (10) und dem Reflektor (12) weniger als 200 Mikron beträgt.

5. Vorrichtung nach Anspruch 4, in der der Abstand zwischen dem Wandler (10) und dem Reflektor (12) im Wesentlichen 100 Mikron beträgt.

6. Vorrichtung nach einem vorrangehenden Anspruch, die so ausgebildet ist, dass ein stehendes Wellenfeld halber Wellenlänge zwischen dem Wandler (10) und dem Reflektor (12) erzeugt wird, wodurch die Teilchen in ein einziges Band konzentriert werden.

7. Vorrichtung nach einem vorrangehenden Anspruch, die eine Wechselstromquelle zum Treiben des Wandlers (10) einschließt, wobei die Anordnung dazu dient, bei einer Resonanzfrequenz der fluidgefüllten zu Kammer arbeiten, die die Leitung bildet, oder bei einer Oberschwingung der Resonanzfrequenz.

8. Vorrichtung nach einem vorrangehenden Anspruch, die dazu ausgebildet ist, Teichen von einem Ort innerhalb einer Kammer, die die Leitung bildet, zu einem anderen Ort innerhalb der Kammer zu bewegen.

9. Vorrichtung nach einem vorrangehenden Anspruch, die dazu ausgebildet ist, Teilchen zu selektiven Ausgangsöffnungen einer Kammer, die die Leitung bildet, abzulenken.

## Revendications

1. Dispositif permettant de réaliser la manipulation de particules en suspension dans un fluide, le dispositif comportant un conduit pour l'écoulement d'un fluide dans lequel des particules sont en suspension, et un transducteur acoustique (10) et un réflecteur (12) pour établir un champ d'ondes stationnaires acoustiques sur la largeur dudit conduit, l'espacement entre le transducteur (10) et le réflecteur (12) étant de 300 microns ou moins.

2. Dispositif tel que revendiqué dans la revendication 1, dans lequel ledit transducteur (10) et ledit réflecteur (12) forment des parois latérales opposées d'une chambre qui fournit ledit conduit.

3. Dispositif tel que revendiqué dans la revendication 1, dans lequel l'un ou les deux parmi le transducteur (10) et le réflecteur (12) est (sont) placé(s) à l'extérieur de parois latérales opposées respectives d'une chambre qui fournit ledit conduit.

4. Dispositif tel que revendiqué dans l'une quelconque des revendications précédentes, dans lequel l'espacement entre ledit transducteur (10) et ledit réflecteur (12) est inférieur à 200 microns.

5. Dispositif tel que revendiqué dans la revendication 4, dans lequel l'espacement entre ledit transducteur (10) et ledit réflecteur (12) est sensiblement de 100 microns.

6. Dispositif tel que revendiqué dans l'une quelconque des revendications précédentes, agencé de façon telle qu'un champ d'ondes stationnaires d'une demi-longueur d'onde est établi entre ledit transducteur (10) et ledit réflecteur (12), lesdites particules étant concentrées en une bande unique.

7. Dispositif tel que revendiqué dans l'une quelconque des revendications précédentes, comportant une source de courant alternatif permettant d'entraîner ledit transducteur (10), l'agencement devant fonctionner selon une fréquence de résonance d'une chambre remplie de fluide qui fournit ledit conduit, ou selon une fréquence harmonique de ladite fréquence de résonance.

8. Dispositif tel que revendiqué dans l'une quelconque des revendications précédentes, agencé pour déplacer des particules depuis un emplacement au sein d'une chambre qui fournit ledit conduit vers un autre emplacement au sein de ladite chambre.

9. Dispositif tel que revendiqué dans l'une quelconque des revendications précédentes, agencé pour dériver des particules vers des orifices de sortie sélectifs d'une chambre qui fournit ledit conduit.
